# EUROPEAN PATENT APPLICATION

(11) **EP 2 939 577 A1**
(43) Date of publication of application: **04.11.2015**
(21) Application number: 15165267.4
(22) Date of filing: 27.04.2015
(51) Int. Cl.: A47J 31/40, A23G 9/22

(54) **INGREDIENT-LOADING DEVICE FOR PREPARATION UNITS OF VENDING MACHINES**

(30) Priority: 29.04.2014 IT MI20140791
(71) Applicant: F.A.S. International S.p.A., 36015 Schio (Vicenza) (IT)
(72) Inventor: Cattaneo, Pietro, 36015 Schio (IT)
(74) Representative: Sgobba, Marco

(57) **Abstract**

An ingredient loading device for preparation units of vending machine comprises a plurality of containers (2) for powder ingredients, having a dispensing element (3) designed to fit into an opening (101) of a preparation unit (100), a plurality of slides (4), coupled to a respective container (2), and adapted to move between a rest position distal from the preparation unit (100) and an operating position in which the dispensing element (3) is inserted in the preparation unit (100), a first actuator member (6) which is selectively operative on one container (2) at a time, and second actuator members (7) located on each container (2) and designed to mate with said actuator member (6) to move the slide (4). A rotary table (8) rotating about an axis of rotation (X), and having the slides (4) slidably engaged therewith, brings a container (2) in front of the first actuator member (6).

## Description

The present invention relates to an ingredient-loading device for preparation units of vending machines. Particularly, the present invention is advantageously employed for loading powders into preparation units for preparing beverages, sorbets, ice-creams and the like in vending machines.

In the preparation of ice-cream products, such as ice-creams, slushes, sorbets, creams, sauces, semi-liquid chocolate, jellies and the like, but also in the preparation of beverages in vending machines, hygiene is of critical importance. Indeed, vending machines are not designed to undergo maintenance each time dispensing occurs, but only after many dispensing operations.

Therefore, it is critical to ensure that all the ingredients required for preparing different products, such as slushes, ice-creams, beverages of different flavors will not mix, as well as that no food powder dispersion occurs between preparations.

For this purpose, vending machines are designed to undergo periodic cleaning and sanitization cycles of all the devices involved in product preparation. Nevertheless, these cleaning cycles considerably complicate both the structure and the operation logic of vending machines, thereby increasing their operating costs and, in certain cases, affecting reliability.

The Applicant believes that advantages would be obtained from equipping vending machines, and particularly vending machines for preparation of ice-cream products, with an ingredient-loading device that would dispense ingredients into the preparation device, e.g. a batch freezer, in as aseptic a manner as possible, i.e. without leaving product residues in the vending machine or near the batch freezer.

Now, the object of the present invention is to provide an ingredient-loading device for preparation units of vending machines, that can introduce ingredients into a preparation device in controlled and hygienic fashion.

This object is fulfilled by an ingredient-loading device for preparation units of vending machines as defined in one or more of the annexed claims.

Further features and advantages of the ingredient-loading device for preparation units of vending machines according to the present invention will be apparent upon reading the following description of one preferred embodiment thereof, which is given by way of illustration and without limitation with reference to the accompanying figures, in which:
- Figure 1 shows a partially sectional schematic lateral view of an ingredient-loading device for preparation units of vending machines according to the present invention,
- Figure 2 shows the device of Figure 1 in a different operating position,
- Figure 3 shows a schematic plan view of the device of Figure 1, with certain parts omitted to better show other parts; and
- Figure 4 shows an enlarged view of a few details of the device of Figure 1.

The device 1 as shown in the annexed figures has been represented schematically, and its parts are not necessarily illustrated to scale.

An ingredient-loading device for preparation units of vending machines according to the present invention will be generally designated by numeral 1.

Reference will be made herein, as a preferred example of preparation unit concerned by the present invention, to a batch freezer for preparing ice-cream products from powder ingredients. Such type of batch freezer comprises a batch freezing cylinder, referenced 100 in the figures, which has a hole 101 for receiving powders. A liquid is also introduced into the batch freezing cylinder, which is designed to mix with the powder ingredients. The batch freezing cylinder 100 may be partially surrounded by cooling members (not shown), which are designed to reduce the temperature of the cylinder walls to values ranging from -5 to -30°C, for example -15°C.

A pair of pistons are operative in the batch freezing cylinder 100, and synchronously reciprocate therein. i.e. move up and down in the cylinder in synchronization with each other, to prepare the ice-cream product. Once such product has been prepared, it is ejected from an ejection opening of the batch freezing cylinder to be dispensed to the user.

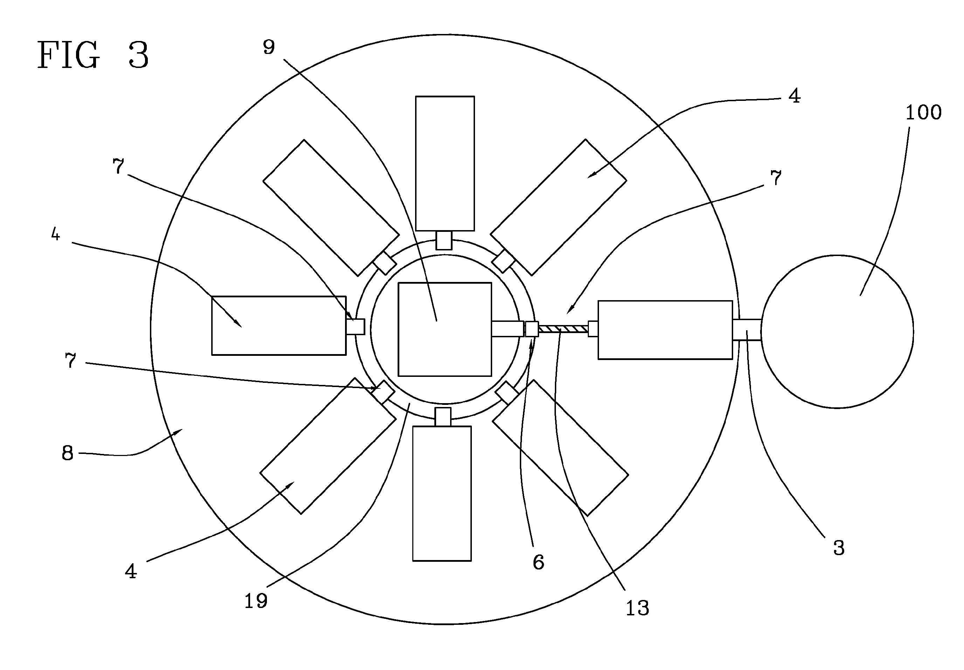

The device 1 comprises a plurality of containers 2 for preferably powdered ingredients, each equipped with a dispensing element 3 designed to at least partially fit into an opening 101 of a preparation unit 100. In the preferred embodiment of the invention, the dispensing element 3 is a hollow cylinder, which is put in fluid communication with the interior of the container 2 and extends away from such container. Preferably, the dispensing element 3 extends beyond the plan layout of the container (as schematically shown in Figure 3), for reasons that will be clarified below. Each container 2 is designed to contain food powders and has a substantially hopper-like structure. Each container 2 has a loading opening for receiving ingredients and an outlet in communication with the dispensing element 3.

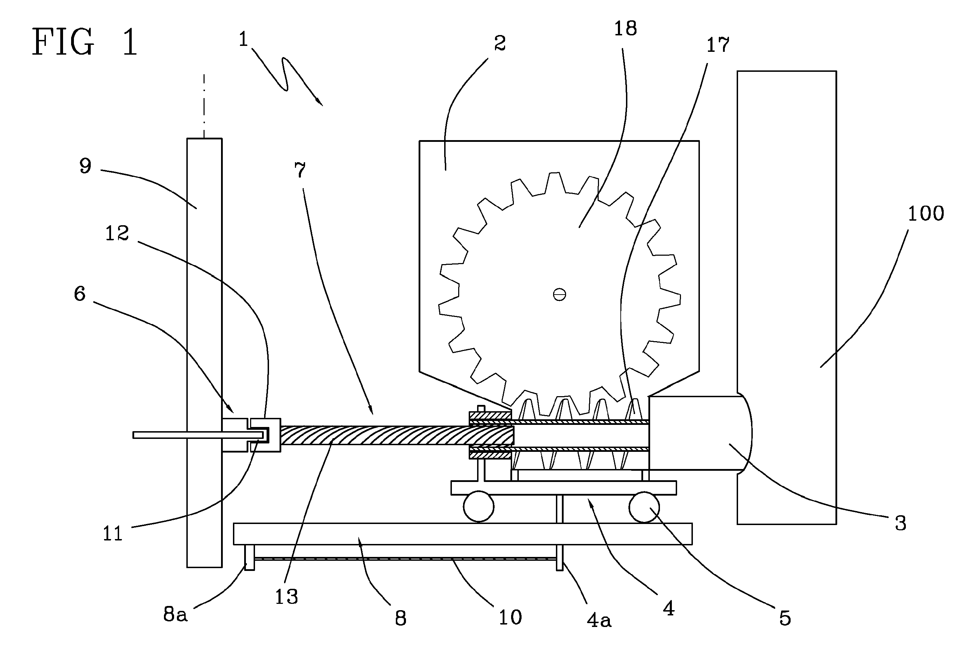

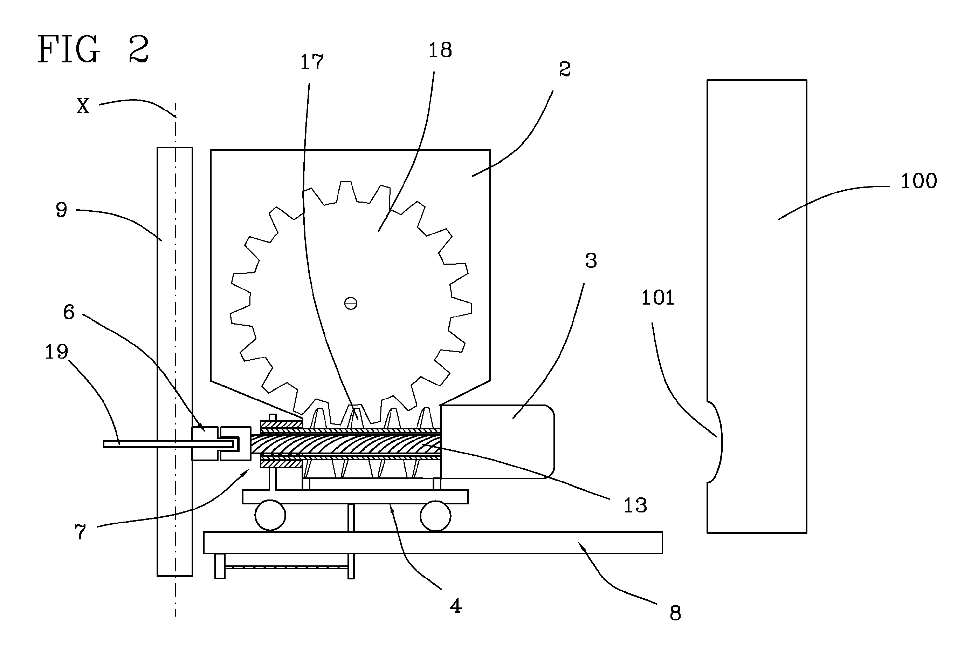

The device 1 further comprises a plurality of slides 4, each being coupled to a respective container 2. In the preferred embodiment of the invention, each slide 4 has wheels 5 for easy displacement thereof on a surface. The containers 2 are removably attached to the slides 4, which allows them to be removed by an operator for maintenance of the device 1. When the containers 2 are fitted onto their respective slides 4, the containers 2 and the slides 4 form a single rigid body. The slides 4 are adapted to move between a rest position (as shown in Figure 2), in which the dispensing element lies distal from the preparation unit 100 and an operating position (as shown in Figure 1) in which the dispensing element 3 lies in a position in which it is at least partially inserted in the preparation unit 100, and particularly at least partially extends into the inlet 101 of the batch freezing cylinder.

In order to move the slides 4, the device 1 a first actuator member 6, which is selectively operative on a single container 2 and/or its respective slide 4. In the preferred embodiment of the invention, the first actuator member 6 is operative on the container 2, which is rigidly joined to the slide 4 and transfers motion thereto. It shall be noted that the first actuator member 2 is operative on one container at a time, whereby a single actuator member 6 may be used for selectively moving all the containers 2 and their respective slides 4. Second actuator members 7 are also provided, which are operative on each container 2 and/or its respective slide 4, and are designed to mate with the first actuator member 6 to move the slide 4. In the preferred embodiment of the invention, the second actuator members 7 are directly operative on each container 2.

The slides 4 and their containers 2 are supported by a rotary plate 8, which is adapted to rotate about an axis of rotation X. The rotary table 7 has a substantially circular shape and has a central hole with a post 9 extending therethrough, along the above mentioned axis X. The rotary table 8 is driven by an electric motor (not shown) via any appropriate mechanism (such as a rack and pinion arrangement). The electric motor is preferably equipped with an encoder to detect the position assumed by the rotary table at each instant. The slides 4 are slidably attached to one another in directions perpendicular to the axis of rotation X of the rotary table 4. In the preferred embodiment of the invention, elastic members 10 are provided (as schematically shown in Figures 1 and 2), which are operable between each slide 4 and the rotary table 8 and are designed to hold the slides 4 in the rest position, proximate to the post 9. In the preferred embodiment of the invention, each slide 4 ha a stem 4a which extends below and away from the slide, and through a straight slit formed in the rotary table 8. This slit radially extends on the rotary table, parallel to the direction of movement of the slide. An additional stem 8a is provided below the rotary table. The elastic member (e.g. a spring) is operative between the two stems. with which said slides, said rotary table being adapted to rotate to bring a container and its respective slide in front of said first actuator member.

The first actuator member 6 comprises a tooth 11 which rotates about an axis substantially perpendicular to the axis of rotation X of the rotary table 8. This rotating tooth 11 is carried by the post 9 and extends therefrom in a radially outward direction. The pin 11 is actuated by an electric motor (not shown) preferably having an encoder. The purpose of the tooth 11 is to rotate the second actuator members 7.

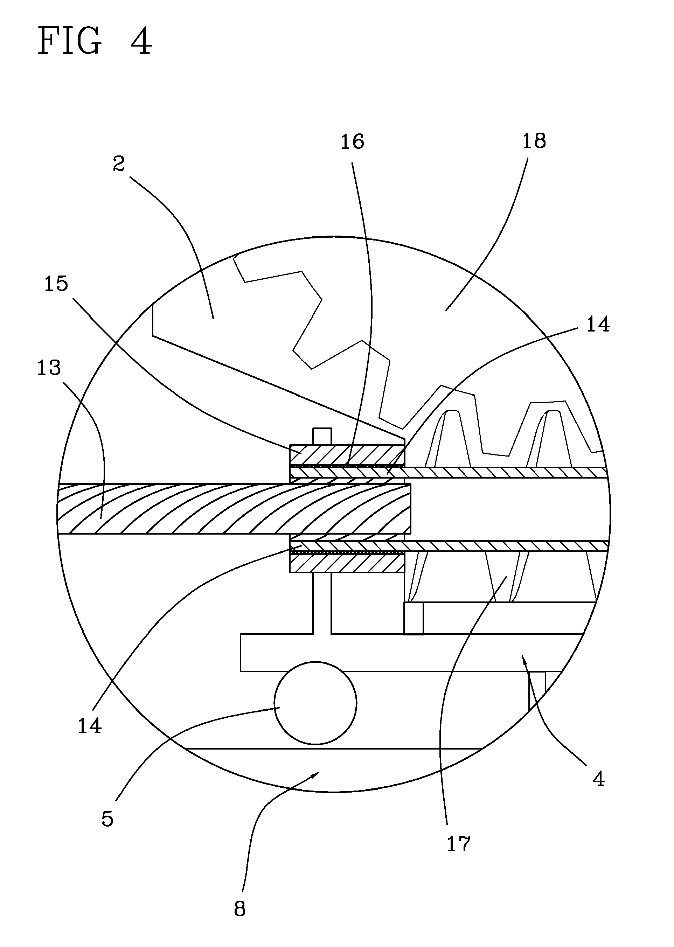

The latter, as mentioned above, are provided on each container 2 and comprise a cursor 12 which has a groove for coupling with the teeth 11, such that the rotation of the tooth 11 causes the rotation of the cursor 12. The cursor is rigidly joined to a threaded rod 13 extending in a direction perpendicular to the axis X and parallel to the direction of movement of the slides. The threaded rod 13 has, for instance, helical threads on its outer surface. The threaded rod is inserted in a threaded bushing 14 engaged on the container 2 (see Figure 4). Thus, the rotation of the threaded rod 13 will exert a force on the container, through its connection with the threaded bushing 14, thereby causing the slide 4 to move. Depending on the direction of rotation of the tooth 11 (and hence the threaded rod 13), the slide will move either toward the rest position or the operating position, thereby moving the slide either toward the center or the periphery of the rotary table. The threaded bushing is inserted in a sleeve 15 which is joined to the container 2 (see Figure 4). A rotational clutch 16 is provided between the threaded bushing 14 and the sleeve 15, which rigidly joins the bushing 16 and the sleeve 15 when the torque transmitted between the threaded bushing and the sleeve 15 is below a threshold value, and allows the threaded bushing 14 to rotate in the sleeve 15 when the above torque exceeds the threshold value. Thus, when the slide is in the rest position and the tooth is actuated to move the slide toward the operating position, the torque transmitted between the threaded bushing 14 and the sleeve 15 is below the threshold value (it should be noted that in this state the torque transmitted by the tooth to the threaded bushing 14 is converted into a force that moves the slide forward). When the slide reaches the operating position and is prevented from further moving forward (e.g. by a mechanical limit stop member or by the action of the elastic members 10), the rotation of the tooth 11 generates a torque on the threaded bushing, which is entirely transmitted to the sleeve 15. This torque, which exceeds the threshold value, is no longer balanced by the clutch 16, whereby the bushing starts to rotate in the sleeve 15 (with the threaded bushing 13).

Advantageously, the threaded bushing is connected to an auger 17 which extends in the container 2 and reaches said dispensing element 3. When the threaded bushing 14 rotates in the sleeve 15, the auger 17 rotates with the threaded bushing 14, thereby pushing the powder ingredient in the container 2 toward the dispensing element 3, out of the container. A gear wheel 18 is provided in the container 2 to increase the effectiveness of the auger 17, which gear wheel meshes with the auger and more effectively conveys the powder material toward the bottom of the container 2 and hence toward the auger 17.

In operation, when a particular food powder is to be fed into the batch freezer, the rotary table 8 is rotated until the container 2 that contains such particular powder comes to alignment with the first actuator member 6, for the tooth 11 to fit into the groove of the cursor 12. For this purpose, the post 9 has a guide ring 19 (see particularly Figure 3), which is designed to slidably engage the grooves of the cursors 12 when the slide is in the rest position. This guide ring 19 ensures that the grooves of the cursors maintain their orientation as the rotary table rotates, by preventing the rotation of the sliders 12. It shall be noted that in this step all the slides 4 are in the rest position, and held in this position by the elastic members 10.

Then, the cursor 11 is actuated, to cause the rotation of the threaded rod 13. The latter is unscrewed from the threaded bushing 14 with which it is engaged and causes the slide 4 to move forward toward the operating position. It shall be noted that in this step the threaded bushing 14 is rigidly joined to the container 2 and does not move (rotate) relative to it.

When the slide reaches the operating position, any further rotation of the tooth 11 and the threaded rod 13 causes the clutch 16 to slip and, as a result, the threaded bushing 14 to rotate relative to the sleeve 15 (and hence relative to the container 2). The rotation of the threaded bushing 14 causes the rotation of the auger 17 which pushes the powders into the dispensing element 3. The rotation of the auger 17 causes in turn the rotation of the gear wheel 18, which assists the powders in reaching the bottom portion of the container 2. When the slide 4 reaches the operating position, the dispensing element 3 has already penetrated the opening 101 of the batch freezer 100, for the powders to be directly dispensed into the batch freezer 2. The rotation of the tooth 11 continues until the right amount of powders is dispensed.

At the end of this dispensing operation, the tooth 11 is rotated in the opposite direction. The clutch 16 stops the rotation of the threaded bushing 14 relative to the sleeve 15 and the slide 4 moves toward the rest position. Once this position has been reached, the cycle stops until a next powder dispensing request.

All the above operations are automatically managed and actuated by a control and monitoring unit.

Therefore, the device 1 of the present invention allows the entire container to be moved to a position in which the ingredients can be directly dispensed into the preparation unit, thereby avoiding any dispersion of ingredients in the vending machine, and ensuring hygiene thereof.

Those skilled in the art will obviously appreciate that a number of changes and variants may be made to the arrangements as described hereinbefore to meet incidental and specific needs, and for instance the slides 4 may be equipped with sliding blocks instead of the above mentioned wheels 5, and the rotary table may have a polygonal shape instead of a circular shape. All of these variants and changes fall within scope of the invention, as defined in the following claims.

## Claims

1. An ingredient-loading device for preparation units of vending machines, comprising:
a plurality of containers (2) for preferably powdered ingredients, each equipped with a dispensing element (3) designed to at least partially fit into an opening (101) of a preparation unit (100);
a plurality of slides (4), each coupled to a respective container (2), said slides (4) being adapted to move between a rest position in which said dispensing element (3) lies distal from the preparation unit (100) and an operating position in which said dispensing element (3) lies in a position in which it is at least partially inserted in the preparation unit (100);
a first actuator member (6), which is selectively operative on a single container (2) and/or its respective slide (4);
second actuator members (7) which are operative and placed on each container (2) and/or its respective slide (4), and are designed to mate with said first actuator member (6) to actuate said slide (4) between the rest position and the operating position;
a rotary table (8) rotating about an axis of rotation (X), with which said slides (4) are slidably engaged in directions perpendicular to said axis of rotation (X) said rotary table (8) being adapted to rotate to bring a container (2) and its respective slide (4) in front of said first actuator member (6).

2. A device as claimed in claim 1, wherein said first actuator member (6) comprises a tooth (11) which rotates about an axis substantially perpendicular to the axis of rotation (X) of the rotary table (8); said rotating tooth (11) being designed to cause rotation of said second actuator members (7).

3. A device as claimed in claim 2, wherein said second actuator members (7) comprise a cursor (12) having a groove, which is designed to mate with said tooth (11), said cursor (12) being joined to a threaded rod (13) engaged in a threaded bushing (14), which is in turn engaged on the container (2) and/or its respective slide (4); the rotation of said threaded rod (13) moving the slide (4) between the rest position and the operative position and vice versa.

4. A device as claimed in claim 3, wherein said threaded bushing (14) is inserted in a sleeve (15) which is joined to the container (2); said threaded bushing (14) being connected to an auger (17) which extends in the container (2) and reaches said dispensing element (3) to feed ingredients thereto.

5. A device as claimed in claim 4, wherein said threaded bushing (14) and said sleeve (15) are mutually engaged by a rotational clutch (16) such that said threaded bushing (14) rotates in said sleeve (15) when the torque transmitted between the threaded bushing (14) and the sleeve (15) is greater than a threshold value.

6. A device as claimed in any of the preceding claims, comprising elastic members (10) operative between each slide (4) and said rotary table (8) to hold the slides (4) that are not engaged by the first actuator member (6) in the rest position.

7. A device as claimed in any of the preceding claims, wherein each container (2) is removably engaged by its respective slide (4).

8. A device as claimed in any of the preceding claims, comprising a vertical post (9) that carries said first actuator member (6); said rotary table (8) rotating about said post (9).

9. A device as claimed in claim 8, wherein said post comprises a guide ring (19), which is designed to slidably engage the grooves of the cursors (12) of the second actuator members (7) of each slide (4) when the latter are in the rest position.

10. A vending machine comprising a batch freezer and an ingredient-loading device as claimed in one or more of claims 1 to 9.
